(19) Europäisches Patentamt
European Patent Office
Office européen des brevets

(11) EP 0 581 787 B1

(12) EUROPEAN PATENT SPECIFICATION

(45) Date of publication and mention of the grant of the patent:
**23.07.1997 Bulletin 1997/30**

(21) Application number: **92907533.1**

(22) Date of filing: **02.04.1992**

(51) Int Cl.[6]: **G07D 5/00**, G07F 3/02

(86) International application number:
**PCT/GB92/00591**

(87) International publication number:
**WO 92/18951 (29.10.1992 Gazette 1992/27)**

# (54) METHOD AND APPARATUS FOR VALIDATING MONEY

VERFAHREN UND VORRICHTUNG ZUM PRÜFEN VON GELD

PROCEDE ET APPAREIL DE VALIDATION DE L'ARGENT

(84) Designated Contracting States:
**CH DE ES FR GB IT LI**

(30) Priority: **18.04.1991 GB 9108355**

(43) Date of publication of application:
**09.02.1994 Bulletin 1994/06**

(73) Proprietor: **MARS INCORPORATED**
**McLean Virginia 22101-3885 (US)**

(72) Inventors:
- **VAKS, Jeffrey Elias**
  **Irvine, CA 92714 (US)**
- **FURNEAUX, David Michael**
  **Maidenhead, Berkshire SL6 6HA (GB)**

(74) Representative: **Musker, David Charles et al**
**R.G.C. Jenkins & Co.**
**26 Caxton Street**
**London SW1H 0RJ (GB)**

(56) References cited:
**EP-A- 0 086 648**
**EP-A- 0 101 276**
**EP-A- 0 367 921**
**DE-A- 2 646 025**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 581 787 B1

**Description**

This invention relates to a method and apparatus for validating items of money, such as coins or banknotes.

It is known when validating coins to perform two or more separate tests on the coin, and to determine that the coin is an authentic coin of a specific type or denomination only if all the test results equal or come close to the results expected for a coin of that type. For example, some known validators have inductive coils which generate electromagnetic fields. By determining the influence of a coin on those fields the circuit is capable of deriving different measurements which are predominantly determined by the thickness, the diameter and the material content of the coins. A coin is deemed authentic only if all three measurements indicate a coin of the same type.

This is represented graphically in Figure 1, in which the three orthogonal axes $P_1$, $P_2$ and $P_3$ represent the three independent measurements. For a coin of type A, the measurement $P_1$ is expected to fall within a range (or window) $W_{A1}$, which lies within the upper and lower limits $U_{A1}$ and $L_{A1}$. Similarly the properties $P_2$ and $P_3$ are expected to lie within the ranges $W_{A2}$ and $W_{A3}$, respectively. If all three measurements lie within the respective windows, the coin is deemed to be an acceptable coin of type A. In these circumstances, the measurements will lie within an acceptance region indicated at $R_A$ in Figure 1.

In Figure 1, the acceptance region $R_A$ is three dimensional, but of course it may be two dimensional or may have more than three dimensions depending upon the number of independent measurements made on the coin.

Clearly, a coin validator which is arranged to validate more than one type of coin would have different acceptance regions $R_B$, $R_C$, etc., for different coin types B, C, etc.

In the prior art, each acceptance window is always predetermined before the test is carried out. Some validators have means for adjusting the acceptance windows. The purpose of the adjustment is either to increase the proportion of valid coins which are determined to be acceptable (by increasing the size of the acceptance window) or to reduce the number of non-genuine coins which are erroneously deemed to be valid (by reducing the size of the acceptance window). Adjustment of the window is carried out either manually, or automatically (e.g. as in EP-A-0155126). In any event, the result of the window adjustment is that the upper and lower limits of the acceptance window are predetermined.

However, by reducing the acceptance windows in order to avoid accepting non-genuine coins, it is possible that genuine coins will then be found to be invalid. Conversely, by increasing the acceptance windows to ensure that a maximum number of genuine coins are found to be valid, more non-genuine coins may also be determined to be valid. The consequence is that adjustment of windows may have adverse effects as well as beneficial effects, and may not increase the "acceptance ratio" (i.e. the ratio of the percentage of genuine coins accepted to the percentage of non-genuine coins accepted), or may only increase this ratio by a small amount.

In the field of banknote validation, measurements are also compared with acceptance regions generally of the form shown in Figure 1. Similar problems thus arise when modifying the acceptance windows to try to avoid accepting non-genuine notes or rejecting genuine notes.

International Patent Application No. PCT/GB90/01588 (EP-A-496 754) and Irish Patent Application No. 3708/90 propose a method of validating items of money comprising deriving at least two different measurements of a tested item, determining whether each measurement lies within a respective range associated with a particular money type, and producing a signal indicating that money of that type has been tested if all measurements fall within the respective ranges for that type, wherein the respective range for at least one of the measurements varies in dependence on at least one other measurement.

The reference to "different measurements" is intended to indicate the measurement of different physical characteristics of the tested item, as distinct from merely taking the same measurement at different times to indicate a single physical characteristic or combination of such characteristics. For example, in GB-A-1 405 937, and in several other prior art arrangements, the time taken for a coin to travel between two points is measured. Although this could be regarded as taking two time measurements and determining the difference, the purpose is simply to obtain a single measurement determined by a particular combination of physical characteristics, and therefore this does not represent "different measurements" as this is understood in the present case. Similarly, it is known to take two successive measurements dependent on the position of a coin with respect to a sensor as the coin passes the sensor, and then to take the difference between those two measurements. Again, this difference would represent a single measurement determined by a single combination of physical characteristics (e.g. a variation in the surface contour of the coin).

In many circumstances, using this technique results in an improved acceptance ratio. For example, it may be found empirically that measurements $P_1$ and $P_2$ of valid money items of type A tend to lie within ranges $W_{A1}$ and $W_{A2}$ respectively. However, it may also be found empirically that genuine items having a large value $P_1$ are unlikely also to have a large value $P_2$. Using the techniques mentioned above, the upper limit of range $W_{A2}$ can be made smaller when large values of $P_1$ are detected. This would not significantly affect the number

of valid items which are erroneously rejected, but would cause counterfeit items which may have large values of $P_1$ and $P_2$ to be rejected.

EP-A-0367921 discloses a technique in which items of money are validated by taking n different measurements of an item of money (where n is an integer equal to or greater than 2) to define a point in n-dimensional space and determining whether or not the point lies within an n-dimensional ellipse associated with a particular item.

EP-A-0505609 (which forms part of the state of the art for novelty only according to Article 54 (3) in respect of Germany, Spain, France, Great Britain and Italy) includes a similar teaching in respect of circular acceptance regions, and suggests that ellipses could also be used.

The present invention is directed to a further and advantageous way of implementing such a technique.

According to the present invention, there is provided a method of validating items of money, the method comprising taking n different measurements of an item of money (where n is an integer equal to or greater than 2) to define a point in n-dimensional space defined by axes representing the n respective measurements, determining whether or not the point lies within an n-dimensional ellipse the axes of which each correspond to a respective property measurement axis associated with a particular item, and using the determination in evaluating whether or not the tested item corresponds to said particular item.

In another aspect, there is provided a method of validating items of money comprising taking n different measurements of an item of money (wherein n is an integer equal to or greater than 2) and determining whether the following expression

$$\sum_{i=1}^{n} (a_i P_i - b_i)^2 ,$$

when evaluated is equal to or greater than a predetermined constant:

wherein $P_1 \ldots P_n$ are related to the respective n measurements and $a_1 \ldots a_n$, $b_1 \ldots b_n$ are predetermined coefficients.

In a further aspect, the invention provides a method of setting up a money validator to enable it to validate items of a particular type, the method comprising determining the statistical mean for each of n different measurements of items of said particular type to be made by the validator (where n is an integer equal to or greater than 2), defining an n-dimensional ellipse having a center which corresponds with said statistical mean and axes which correspond to property measurement axes, and storing information defining said ellipse in the validator to enable the validator to determine whether or not property measurements made on a tested item define a point within the ellipse and thereby determine whether or not the tested item is of said particular type.

In a further aspect, as far as it relates to the set of claims for the Contracting States CH, DE, ES, FR, IT the invention provides a method of identifying items of money, the method comprising taking n different measurements of an item of money (where n is an integer equal to or greater than 2) to define a point in n-dimensional space defined by axes representing the n respective measurements, determining which of the centroids of a plurality of n-dimensional ellipses each associated with a type of item of money the said point is closest to and using the determination in evaluating which type of item the tested item corresponds.

In this patent application, an "n-dimensional ellipse" is a figure in n dimensions which comprises an ellipse when $n = 2$; an ellipsoid when $n = 3$; and, when n is greater than 3, comprises a higher dimensional surface defined by an equation corresponding to that of an ellipse in a higher number of dimensions.

The invention provides a particularly convenient and effective way of arranging for rejection of money items which exhibit property measurements which in combination suggest that the item is statistically unlikely to be genuine.

Preferably, the centre of the n-dimensional ellipse corresponds to the mean values of the n different measurements for a population of those particular money items, as determined by statistical analysis. These mean values may differ between individual coin testing apparatuses, and if desired, a calibration process can be carried out in order to determine the mean values (or quantities related thereto) for the individual testing apparatuses. Preferably, the size of the n-dimensional ellipse, when measured along each axis corresponding to a respective property measurement, is equal to a predetermined factor multiplied by the standard deviation of the respective property measurement for that particular money item, as determined by statistical analysis. These standard deviations may be assumed to be the same for individual testing apparatuses of the same general type, i.e. individual calibration may not be required to derive the standard deviation value.

The invention also extends to money validating apparatus arranged to operate in accordance with a method of the invention.

Arrangements embodying the invention will now be described by way of example with reference to the accompanying drawings, in which:

Figure 1 schematically illustrates an acceptance region in a conventional validator;

Figure 2 is a schematic diagram of a coin validator in accordance with the present invention;

Figure 3 illustrates by way of example a table stored in a memory of the validator of Figure 2, the table defining acceptance regions;

Figure 4 schematically illustrates an acceptance region for the validator of Figure 2;

Figure 5 schematically illustrates the Figure 4 acceptance region using different axes.

The coin testing apparatus 2 shown schematically in Figure 2 has a set of coin sensors indicated at 4. Each of these is operable to measure a different property of a coin inserted in the apparatus, in a manner which is in itself well known. Each sensor provides a signal indicating the measured value of the respective parameter on one of a set of output lines indicated at 6.

An LSI 8 receives these signals. The LSI 8 contains a read-only memory storing an operating program which controls the way in which the apparatus operates. Instead of an LSI, a standard microprocessor may be used. The LSI is operable to process the measured values received on respective input lines 6 with data values stored in predetermined locations in a PROM 10. The PROM 10 could be any other type of memory circuit, and could be formed of a single or several integrated circuits, or may be combined with the LSI 8 (or microprocessor) into a single integrated circuit.

The LSI 8, which operates in response to timing signals produced by a clock 12, is operable to address the PROM 10 by supplying address signals on an address bus 14. The LSI also provides a "PROM-enable" signal on line 16 to enable the PROM.

In response to the addressing operation, a data value is delivered from the PROM 10 to the LSI 8 via a data bus 18.

By way of example, one embodiment of the invention may comprise three sensors, for respectively measuring the conductivity, thickness and diameter of inserted coins. Each sensor comprises one or more coils in a self-oscillating circuit. In the case of the diameter and thickness sensors, a change in the inductance of each coil caused by the proximity of an inserted coin causes the frequency of the oscillator to alter, whereby a digital representation of the respective property of the coin can be derived. In the case of the conductivity sensor, a change in the Q of the coil caused by the proximity of an inserted coin causes the voltage across the coil to alter, whereby a digital output representative of conductivity of the coin may be derived. Although the structure, positioning and orientation of each coil, and the frequency of the voltage applied thereto, are so arranged that the coil provides an output predominantly dependent upon a particular one of the properties of conductivity, diameter and thickness, it will be appreciated that each measurement will be affected to some extent by other coin properties.

The apparatus so far described corresponds to that disclosed in GB-A-2094008. In that apparatus, on insertion of a coin, the measurements produced by the three sensors 4 are compared with reference values stored in a region of the PROM 10. Each property measurement is compared with the upper and lower limits, representing a window, for each of six coins A to F. If the measured properties all lie within the upper and lower limits of the respective ranges for a particular coin, then the coin is deemed valid and the LSI 8 produces an ACCEPT signal on one of a group of output lines 24, and a further signal on another of the output lines 24 to indicate the denomination of the coin being tested. The validator has an accept gate (not shown) which adopts one of two different states depending upon whether the ACCEPT signal is generated, so that all tested coins deemed genuine are directed along an accept path and all other tested items along another path.

The validator of GB-A-2094008 has acceptance regions, defined by the values stored in PROM 10, generally of the form shown in Figure 1.

In the present embodiment of the invention, however, each of the six acceptance regions has the form shown at $R_A$ in Figure 4. This differs from the region of Figure 1 in that it is substantially ellipsoidal in shape. The width of the region $R_A$, when measured along the axis $P_1$, is preferably equal to $s.D_1$, where $D_1$ represents the standard deviation of the measured property $P_1$ of a population of coins from the mean value (which has been empirically determined prior to calibration of the validator), and s represents a predetermined acceptance factor which is calculated in accordance with the desired statistical likelihood of a coin which is accepted by the validator actually being genuine. The factor s is determined in accordance with the desired compromise between accepting non-genuine items and rejecting genuine items. Similarly, the region $R_A$ has widths when measured in the directions of axes $P_2$ and $P_3$ which are equal to $s.D_2$ and $s.D_3$, respectively. (If desired, the factor s may vary for one or more of the axes.)

It will be appreciated that items falling within the region $R_A$ are statistically likely to be acceptable coins, whereas items falling outside the acceptance region are statistically unlikely to be genuine. (Such items would include those which have more than one property measurement close to the individual limits for the respective properties.)

The mid-point M of the region $R_A$ in Figure 4 is the statistical mean of the coin population measurements for each of the properties $P_1$, $P_2$ and $P_3$.

One possible way of operating the validator in order to achieve an acceptance region $R_A$ as shown in Figure 4 will be explained below.

With reference to Figure 3, the PROM 10 stores, for each of coin denominations A to F, a value (e.g. $M_{A1}$) representing the statistical mean of the measurements of property $P_1$ of a population of coins of denomination A, and a value (e.g. $D_{A1}$) representing the standard deviation for those property measurements, and corresponding values for the other properties $P_2$ and $P_3$.

In order to validate an inserted item, the LSI takes all three of the measurements $P_1$, $P_2$ and $P_3$ of the inserted item. The LSI then addresses the PROM 10 so as to read out therefrom the stored values relating to coin A, in order for the LSI to be able to perform the

following calculation:

$$Dist=\left(\frac{P_1 - M_1}{D_1}\right)^2 + \left(\frac{P_2 - M_2}{D_2}\right)^2 + \left(\frac{P_3 - M_3}{D_3}\right)^2 \quad (1)$$

The value Dist corresponds to the length of a vector from the mid-point M of the acceptance region to the point representing the measured properties $P_1$, $P_2$ and $P_3$. The LSI then tests to determine whether Dist ≥ K, where K is a predetermined value. If so, then the measured properties lie outside the acceptance region $R_A$, and the item is deemed to be non-genuine. Otherwise, the test for the property measurements $P_1$, $P_2$ and $P_3$ have been passed. The item is thus deemed to be genuine of denomination A. If the test fails for denomination A, it is performed for denomination B, and so on, until the item either is identified as genuine of some denomination or rejected.

The above calculation assumes s to be the same for all properties. If s differs, the test can be modified to:

$$\left(\frac{P_1 - M_1}{s_1 . D_1}\right)^2 + \left(\frac{P_2 - M_2}{s_2 . D_2}\right)^2 + \left(\frac{P_3 - M_3}{s_3 . D_3}\right)^2 \geq K' \quad (2)$$

(where K' is a predetermined constant) and the PROM 10 can store the products $s_1.D_{A1}$, $s_2.D_{A2}$, ... etc. instead of the deviations $D_{A1}$, $D_{A2}$, ... etc.

The value Dist effectively represents a single distance value signifying how close all the property measurements are to the statistical mean (centroid). This can be seen more clearly by referring to Figure 5, which replots the acceptance region $R_A$ of Figure 4 on to axes which represent the ratios of the properties $P_1$, $P_2$ and $P_3$ to the products of the respective acceptance factors and standard deviations $s_1.D_1$, $s_2.D_2$ and $s_3.D_3$, and thus have corresponding scales. It will be seen that the acceptance region $R_A$ becomes spherical. The value Dist represents the length of the vector V from the mid-point M to the point P representing the measured properties. To reduce the amount of calculation needed, the value Dist is actually equal to the square of this distance, but this does not matter so long as the constant K is chosen appropriately.

Once the evaluation has been carried out in respect of coin A, the same process is carried out in respect of the other coins B to F, which would have respective acceptance regions at different locations and probably of different sizes.

If desired, the calculation could be modified. In general, the following formula could be evaluated to determine whether a coin is acceptable:

$$\sum_{i=1}^{n} (a_i P_i - b_i)^2 \geq K'' \quad \ldots (3)$$

wherein K" is a predetermined constant, and $a_n$, $b_n$ are coefficients for each of the n properties of a particular coin denomination, which can be derived using statistical techniques on a population of coins of that denomination. These coefficients could be individually calculated and separately stored, or as in equations (1) and (2) other coefficients related thereto could be stored.

Although it is preferred that this technique be used to test for all the denominations of the coin set with which the validator is to be used, the technique could instead be applied just to the testing of one or more of the coin denominations. It may also be used only in respect of some of the measured properties, further properties being used to evaluate acceptance in a conventional manner.

Although the technique has been described in respect of acceptance regions, whereby a coin is deemed to be valid if its properties lie within the region, the technique is also applicable to rejection regions, i.e. regions within which the properties of specific types of non-genuine items are expected to lie. Thus, if the measured properties are found to lie within such a rejection region, the item is deemed to be non-genuine and rejected.

It is possible to have overlapping regions each associated with a respective different item, in which case the region within which the measured properties are deemed to lie is that associated with the closest mid-point to the measured properties.

As an alternative procedure, irrespective of whether or not there are overlapping regions, the LSI 8 may perform a pre-classifying step whereby it determines which mid-point is closest to the measurement point, thus nominally identifying the tested item, and then determine whether or not the measurement point lies within the ellipse surrounding the mid-point, thus determining acceptability.

The measurements of the properties, as represented in Fig. 4, could be values proportional to physical quantities, but they need not be. They could for example be values representing changes in a physical parameter, such as the frequency of an oscillator, caused when an item moves to a testing position.

Although the above description refers to determining whether particular expressions, when evaluated, are equal to or greater than a predetermined value (thus indicating that the tested item does not correspond to a particular coin denomination), of course this is entirely equivalent to determining whether the expression is equal to or less than a (slightly smaller) predetermined value (thus indicating that the item does correspond to a particular denomination).

References herein to coins are intended to encompass also tokens and other coin-like items.

Although the preceding description relates to the field of coin validation, it will be understood that the techniques are similarly applicable to banknote validation.

## Claims

### Claims for the following Contracting States : CH, DE, ES, FR, IT

1. A method of validating items of money, the method comprising taking n different measurements of an item of money (where n is an integer equal to or greater than 2) to define a point in n-dimensional space defined by axes representing the n respective measurements, determining whether or not the point lies within an n-dimensional ellipse the axes of which each correspond to a respective property measurement axis associated with a particular item, and using the determination in evaluating whether or not the tested item corresponds to said particular item.

2. A method as claimed in claim 1, the method including the step of determining whether or not the point lies within any one of a plurality of n-dimensional ellipses each associated with a respective type of money item, and providing a signal indicative of the type of item which has been tested in accordance with the n-dimensional ellipse within which the point has been found to lie.

3. A method as claimed in claim 1, wherein the ellipse is associated with a non-genuine item, and the method includes the step of issuing a signal indicating that the tested item is not genuine if the point lies within said ellipse.

4. A method of validating items of money comprising taking n different measurements of an item of money (wherein n is an integer equal to or greater than 2) and determining whether the following expression

$$\sum_{i=1}^{n} (a_i P_i - b_i)^2 ,$$

when evaluated is equal to or greater than a predetermined constant:

wherein $P_1 \dots P_n$ are related to the respective n measurements and $a_1 \dots a_n$, $b_1 \dots b_n$ are predetermined coefficients.

5. A method as claimed in claim 4, wherein each of the coefficients $a_1 \dots a_n$, $b_1 \dots b_n$ is individually stored to enable its use for evaluating said expression.

6. A method as claimed in claim 5, wherein other coefficients related to the coefficients $a_1 \dots a_n$, $b_1 \dots b_n$ are stored to enable their use in the evaluation of said expression.

7. A method of setting up a money validator to enable it to validate items of a particular type, the method comprising determining the statistical mean for each of n different measurements of items of said particular type to be made by the validator (where n is an integer equal to or greater than 2), defining an n-dimensional ellipse having a center which corresponds with said statistical mean and axes which correspond to property measurement axes, and storing information defining said ellipse in the validator to enable the validator to determine whether or not property measurements made on a tested item define a point within the ellipse and thereby determine whether or not the tested item is of said particular type.

8. A method as claimed in claim 7, wherein the method involves determining the statistical mean of each measurement individually for each of a plurality of coin validators.

9. A method as claimed in claim 7 or claim 8, wherein each axis of the ellipse is calculated in dependence upon the determined standard deviation for a respective measurement.

10. A method of identifying items of money, the method comprising taking n different measurements of an item of money (where n is an integer equal to or greater than 2) to define a point in n-dimensional space defined by axes representing the n respective measurements, determining which of the centroids of a plurality of n-dimensional ellipses each associated with a type of item of money the said point is closest to and using the determination in evaluating which type of item the tested item corresponds.

11. A coin validator including means for taking measurements of a coin, and a control circuit operable to validate the coin in accordance with a method as claimed in any one of claims 1 to 6.

12. A banknote validator comprising means for taking measurements of a banknote, and a control circuit operable to validate the banknote in accordance with a method as claimed in any one of claims 1 to 6.

13. A method according to claim 10, in which said step

of determining comprises calculating, for each said n-dimensional ellipse, a distance metric (Dist) representing a single distance value signifying how close the property measurements are to the centroid of each ellipse.

**14.** A method according to claim 13, in which said distance value is calculated as a weighted sum of the respective differences between each said measurement and the statistical mean of the measurements (corresponding to the centroid of the ellipse on the axis corresponding to that measurement), normalised by the standard deviation of the measurements (corresponding to the width of the ellipse on the axis corresponding to that measurement).

**Claims for the following Contracting State : GB**

**1.** A method of validating items of money, the method comprising taking n different measurements of an item of money (where n is an integer equal to or greater than 2) to define a point in n-dimensional space defined by axes representing the n respective measurements, determining whether or not the point lies within an n-dimensional ellipse the axes of which each correspond to a respective property measurement axis associated with a particular item, and using the determination in evaluating whether or not the tested item corresponds to said particular item.

**2.** A method as claimed in claim 1, the method including the step of determining whether or not the point lies within any one of a plurality of n-dimensional ellipses each associated with a respective type of money item, and providing a signal indicative of the type of item which has been tested in accordance with the n-dimensional ellipse within which the point has been found to lie.

**3.** A method as claimed in claim 1, wherein the ellipse is associated with a non-genuine item, and the method includes the step of issuing a signal indicating that the tested item is not genuine if the point lies within said ellipse.

**4.** A method of validating items of money comprising taking n different measurements of an item of money (wherein n is an integer equal to or greater than 2) and determining whether the following expression

$$\sum_{i=1}^{n} (a_i P_i - b_i)^2 ,$$

when evaluated is equal to or greater than a predetermined constant:

wherein $P_1 \ldots P_n$ are related to the respective n measurements and $a_1 \ldots a_n$, $b_1 \ldots b_n$ are predetermined coefficients.

**5.** A method as claimed in claim 4, wherein each of the coefficients $a_1 \ldots a_n$, $b_1 \ldots b_n$ is individually stored to enable its use for evaluating said expression.

**6.** A method as claimed in claim 5, wherein other coefficients related to the coefficients $a_1 \ldots a_n$, $b_1 \ldots b_n$ are stored to enable their use in the evaluation of said expression.

**7.** A method of setting up a money validator to enable it to validate items of a particular type, the method comprising determining the statistical mean for each of n different measurements of items of said particular type to be made by the validator (where n is an integer equal to or greater than 2), defining an n-dimensional ellipse having a center which corresponds with said statistical mean and axes which correspond to property measurement axes, and storing information defining said ellipse in the validator to enable the validator to determine whether or not property measurements made on a tested item define a point within the ellipse and thereby determine whether or not the tested item is of said particular type.

**8.** A method as claimed in claim 7, wherein the method involves determining the statistical mean of each measurement individually for each of a plurality of coin validators.

**9.** A method as claimed in claim 7 or claim 8, wherein each axis of the ellipse is calculated in dependence upon the determined standard deviation for a respective measurement.

**10.** A coin validator including means for taking measurements of a coin, and a control circuit operable to validate the coin in accordance with a method as claimed in any one of claims 1 to 6.

**11.** A banknote validator comprising means for taking measurements of a banknote, and a control circuit operable to validate the banknote in accordance with a method as claimed in any one of claims 1 to 6.

**Patentansprüche**

**Patentansprüche für folgende Vertragsstaaten : CH, DE, ES, FR, IT**

1. Verfahren zur Prüfung von Geldgegenständen, mit dem Vornehmen von n verschiedenen Messungen an einem Geldgegenstand (wobei n eine ganze Zahl größer oder gleich 2 ist), um einen Punkt in einem n-dimensionalen Raum festzulegen, der von Achsen definiert ist, die die entsprechenden n Messungen darstellen, dem Feststellen, ob der Punkt innerhalb einer n-dimensionalen Ellipse liegt, deren Achsen jeweils einer einem speziellen Gegenstand zugeordneten entsprechenden Eigenschaftsmeßachse entsprechen, und dem Verwenden der Feststellung zur Prüfung, ob der getestete Gegenstand dem genannten speziellen Gegenstand entspricht.

2. Verfahren nach Anspruch 1 mit einem Schritt zum Feststellen, ob der Punkt innerhalb irgendeiner mehrerer n-dimensionaler Ellipsen liegt, die jeweils einem entsprechenden Geldgegenstandstyp zugeordnet sind, und Liefern eines Signals, das entsprechend der n-dimensionalen Ellipse, innerhalb der der Punkt gefunden wurde, den Typ des getesteten Gegenstands angibt.

3. Verfahren nach Anspruch 1, wobei die Ellipse einem nicht echten Gegenstand zugeordnet ist und das Verfahren einen Schritt zur Ausgabe eines Signals beinhaltet, das angibt, daß der getestete Gegenstand nicht echt ist, wenn der Punkt innerhalb der Ellipse liegt.

4. Verfahren zur Prüfung von Geldgegenständen, mit der Vornahme n verschiedener Messungen an einem Geldgegenstand (wobei n eine ganze Zahl größer oder gleich 2 ist) und dem Bestimmen, ob der berechnete Ausdruck

$$\sum_{i=1}^{n}(a_i P_i - b_i)^2 ,$$

gleich oder größer als eine vorbestimmte Konstante ist,

wobei sich $P_1 \ldots P_n$ auf die entsprechenden n Messungen beziehen und $a_1 \ldots a_n$, $b_1 \ldots b_n$ vorbestimmte Koeffizienten darstellen.

5. Verfahren nach Anspruch 4, wobei jeder der Koeffizienten $a_1 \ldots a_n$, $b_1 \ldots b_n$ einzeln abgespeichert ist, um zum Berechnen des Ausdrucks verwendet werden zu können.

6. Verfahren nach Anspruch 5, wobei andere sich auf die Koeffizienten $a_1 \ldots a_n$, $b_1 \ldots b_n$ beziehende Koeffizienten gespeicherte sind, damit sie zum Berechnen des genannten Ausdrucks verwendet werden können.

7. Verfahren zur Einrichtung eines Geldprüfers, damit dieser Gegenstände eines speziellen Typs prüfen kann, mit dem Bestimmen des statistischen Mittels für jede von n verschiedenen Messungen an Gegenständen des speziellen Typs, die von dem Prüfer durchgeführt werden sollen (wobei n eine ganze Zahl größer oder gleich 2 ist), Festlegen einer n-dimensionalen Ellipse mit einem Zentrum, das dem genannten statistischen Mittel entspricht, und mit Achsen, die Eigenschaftsmeßachsen entsprechen, und Speichern von Informationen, die die Ellipse festlegen, in dem Prüfer, damit dieser feststellen kann, ob an einem getesteten Gegenstand durchgeführte Eigenschaftsmessungen einen Punkt innerhalb der Ellipse angeben, um somit festzustellen, ob der getestete Gegenstand dem genannten speziellen Typ entspricht.

8. Verfahren nach Anspruch 7, mit dem Bestimmen des statistischen Mittels der jeweiligen Messung einzeln für jeden einer Vielzahl an Münzprüfern.

9. Verfahren nach Anspruch 7 oder 8, wobei die Achsen der Ellipse jeweils in Abhängigkeit von der festgestellten Standardabweichung für eine entsprechende Messung berechnet werden.

10. Verfahren zur Erkennung von Geldgegenständen, aufweisend:

Vornehmen von n verschiedenen Messungen an einem Geldgegenstand (wobei n eine ganze Zahl größer oder gleich 2 ist), um einen Punkt in einem von den die n entsprechenden Messungen darstellenden Achsen definierten n-dimensionalen Raum festzulegen, Feststellen, welchem der Schwerpunkte einer Vielzahl n-dimensionaler Ellipsen, die jeweils einem Geldgegenstandstyp zugeordnet sind, der genannte Punkt am nächsten liegt, und Verwenden der Feststellung zur Prüfung, welchem Gegenstandstyp der getestete Gegenstand entspricht.

11. Münzprüfer mit einer Einrichtung zur Vornahme von Messungen an einer Münze und einer Steuerschaltung zur Prüfung der Münze gemäß einem Verfahren nach einem der Ansprüche 1 bis 6.

12. Banknotenprüfer mit einer Einrichtung zur Vornahme von Messungen an einer Banknote und einer Steuerschaltung zur Prüfung der Banknote gemäß einem Verfahren nach einem der Ansprüche 1 bis 6.

13. Verfahren nach Anspruch 10, wobei der genannte

Feststellungsschritt für jede der n-dimensionalen Ellipsen das Berechnen eines Abstandsmaßes (Dist) umfaßt, das einen einzigen Abstandswert darstellt, der bezeichnet, wie dicht die Eigenschaftsmessungen am Schwerpunkt der jeweiligen Ellipse liegen.

**14.** Verfahren nach Anspruch 13, wobei der Abstandswert als gewichtete Summe der entsprechenden Differenzen zwischen der jeweiligen Messung und dem statistischen Mittel der Messungen (entsprechend dem Schwerpunkt der Ellipse auf der jener Messung entsprechenden Achse), und mittels der Standardabweichung der Messungen (entsprechend der Breite der Ellipse auf der jener Messung entsprechenden Achse) normalisiert berechnet wird.

**Patentansprüche für folgenden Vertragsstaat : GB**

**1.** Verfahren zur Prüfung von Geldgegenständen, mit dem Vornehmen von n verschiedenen Messungen an einem Geldgegenstand (wobei n eine ganze Zahl größer oder gleich 2 ist), um einen Punkt in einem n-dimensionalen Raum festzulegen, der von Achsen definiert ist, die die entsprechenden n Messungen darstellen, dem Feststellen, ob der Punkt innerhalb einer n-dimensionalen Ellipse liegt, deren Achsen jeweils einer einem speziellen Gegenstand zugeordneten entsprechenden Eigenschaftsmeßachse entsprechen, und dem Verwenden der Feststellung zur Prüfung, ob der getestete Gegenstand dem genannten speziellen Gegenstand entspricht.

**2.** Verfahren nach Anspruch 1 mit einem Schritt zum Feststellen, ob der Punkt innerhalb irgendeiner mehrerer n-dimensionaler Ellipsen liegt, die jeweils einem entsprechenden Geldgegenstandstyp zugeordnet sind, und Liefern eines Signals, das entsprechend der n-dimensionalen Ellipse, innerhalb der der Punkt gefunden wurde, den Typ des getesteten Gegenstands angibt.

**3.** Verfahren nach Anspruch 1, wobei die Ellipse einem nicht echten Gegenstand zugeordnet ist und das Verfahren einen Schritt zur Ausgabe eines Signals beinhaltet, das angibt, daß der getestete Gegenstand nicht echt ist, wenn der Punkt innerhalb der Ellipse liegt.

**4.** Verfahren zur Prüfung von Geldgegenständen, mit der Vornahme n verschiedener Messungen an einem Geldgegenstand (wobei n eine ganze Zahl größer oder gleich 2 ist) und dem Bestimmen, ob der berechnete Ausdruck

$$\sum_{i=1}^{n}(a_i P_i - b_i)^2 ,$$

gleich oder größer als eine vorbestimmte Konstante ist,

wobei sich $P_1 ... P_n$ auf die entsprechenden n Messungen beziehen und $a_1 ... a_n$, $b_1 ... b_n$ vorbestimmte Koeffizienten darstellen.

**5.** Verfahren nach Anspruch 4, wobei jeder der Koeffizienten $a_1 ... a_n$, $b_1 ... b_n$ einzeln abgespeichert ist, um zum Berechnen des Ausdrucks verwendet werden zu können.

**6.** Verfahren nach Anspruch 5, wobei andere sich auf die Koeffizienten $a_1 ... a_n$, $b_1 ... b_n$ beziehende Koeffizienten gespeicherte sind, damit sie zum Berechnen des genannten Ausdrucks verwendet werden können.

**7.** Verfahren zur Einrichtung eines Geldprüfers, damit dieser Gegenstände eines speziellen Typs prüfen kann, mit dem Bestimmen des statistischen Mittels für jede von n verschiedenen Messungen an Gegenständen des speziellen Typs, die von dem Prüfer durchgeführt werden sollen (wobei n eine ganze Zahl größer oder gleich 2 ist), Festlegen einer n-dimensionalen Ellipse mit einem Zentrum, das dem genannten statistischen Mittel entspricht, und mit Achsen, die Eigenschaftsmeßachsen entsprechen, und Speichern von Informationen, die die Ellipse festlegen, in dem Prüfer, damit dieser feststellen kann, ob an einem getesteten Gegenstand durchgeführte Eigenschaftsmessungen einen Punkt innerhalb der Ellipse angeben, um somit festzustellen, ob der getestete Gegenstand dem genannten speziellen Typ entspricht.

**8.** Verfahren nach Anspruch 7, mit dem Bestimmen des statistischen Mittels der jeweiligen Messung einzeln für jeden einer Vielzahl an Münzprüfern.

**9.** Verfahren nach Anspruch 7 oder 8, wobei die Achsen der Ellipse jeweils in Abhängigkeit von der festgestellten Standardabweichung für eine entsprechende Messung berechnet werden.

**10.** Münzprüfer mit einer Einrichtung zur Vornahme von Messungen an einer Münze und einer Steuerschaltung zur Prüfung der Münze gemäß einem Verfahren nach einem der Ansprüche 1 bis 6.

**11.** Banknotenprüfer mit einer Einrichtung zur Vornahme von Messungen an einer Banknote und einer Steuerschaltung zur Prüfung der Banknote gemäß einem Verfahren nach einem der Ansprüche 1 bis 6.

## Revendications

### Revendications pour les Etats contractants suivants : CH, DE, ES, FR, IT

1. Procédé de validation d'éléments d'argent, le procédé comprenant l'exécution de n mesures différentes d'un élément d'argent (n étant un entier égal ou supérieur à 2), pour définir un point dans un espace à n dimensions, défini par des axes représentant les n mesures respectives, la détermination du fait que le point se trouve ou non à l'intérieur d'une ellipse à n dimensions, dont les axes correspondent chacun à un axe de mesure de propriété respectif associé à un élément particulier, et l'utilisation de la détermination pour évaluer si l'élément vérifié correspond ou non audit élément particulier.

2. Procédé selon la revendication 1, le procédé comportant l'étape de détermination du fait que le point se trouve ou non à l'intérieur de l'une parmi une pluralité d'ellipses à n dimensions, chacune étant associée à un type respectif d'élément d'argent, et de fourniture d'un signal représentant le type d'élément qui a été vérifié conformément à l'ellipse à n dimensions à l'intérieur de laquelle il a été déterminé que se trouvait le point.

3. Procédé selon la revendication 1, dans lequel l'ellipse est associée à un élément non-authentique, et le procédé comporte l'étape de fourniture d'un signal indiquant que l'élément vérifié n'est pas authentique si le point se trouve à l'intérieur de ladite ellipse.

4. Procédé de validation d'éléments d'argent, comprenant l'exécution de n mesures différentes d'un élément d'argent (n étant un entier égal ou supérieur à 2), et la détermination du fait que l'expression suivante

$$\sum_{i=1}^{n} (a_i P_i - b_i)^2$$

est égale ou supérieure, lorsqu'elle est évaluée, à une constante prédéterminée:

dans laquelle $P_1 \ldots P_n$ concernent les n mesures respectives, et $a_i \ldots a_n$, $b_i \ldots b_n$ sont des coefficients prédéterminés.

5. Procédé selon la revendication 4, dans lequel chacun des coefficients $a_i \ldots a_n$, $b_i \ldots b_n$ est stocké individuellement pour permettre son utilisation pour évaluer ladite expression.

6. Procédé selon la revendication 5, dans lequel les autres coefficients liés aux coefficients $a_i \ldots a_n$, $b_i \ldots b_n$ sont stockés pour permettre leur utilisation lors de l'évaluation de ladite expression.

7. Procédé d'installation d'un appareil de validation de l'argent, destiné à lui permettre de valider des éléments d'un type particulier, le procédé comprenant la détermination de la moyenne statistique pour chacune des n différentes mesures d'éléments dudit type particulier destinées à être exécutées par l'appareil de validation (n étant un entier égal ou supérieur à 2), la définition d'une ellipse à n dimensions, ayant un centre qui correspond à ladite moyenne statistique, et des axes qui correspondent aux axes de mesure de propriété, et le stockage d'informations définissant ladite ellipse dans l'appareil de validation, pour permettre à l'appareil de validation de déterminer si des mesures de propriété exécutées sur un élément vérifié définissent ou non un point à l'intérieur de l'ellipse, et déterminent ainsi si l'élément vérifié est ou non dudit type particulier.

8. Procédé selon la revendication 7, dans lequel le procédé implique la détermination de la moyenne statistique de chaque mesure, individuellement pour chacun parmi une pluralité d'appareil de validation de pièces de monnaie.

9. Procédé selon la revendication 7 ou la revendication 8, dans lequel chaque axe de l'ellipse est calculé en fonction de l'écart type déterminé pour une mesure respective.

10. Procédé d'identification d'éléments d'argent, le procédé comprenant l'exécution de n mesures différentes d'un élément d'argent (n étant un entier égal ou supérieur à 2) pour définir un point dans un espace à n dimensions, défini par des axes représentant les n mesures respectives, la détermination de celui des centres d'une pluralité d'ellipses à n dimensions, chacun étant associé à un type d'élément d'argent, qui est le plus proche dudit point, et l'utilisation de la détermination pour évaluer à quel type d'élément correspond l'élément vérifié.

11. Appareil de validation de pièces de monnaie, comportant des moyens pour prendre des mesures d'une pièce de monnaie, et un circuit de commande pouvant agir pour valider la pièce de monnaie selon un procédé tel que décrit dans l'une quelconque des revendications 1 à 6.

12. Appareil de validation de billets de banque, comportant des moyens pour prendre des mesures d'un billet de banque, et un circuit de commande pouvant agir pour valider le billet de banque selon un procédé tel que décrit dans l'une quelconque des

revendications 1 à 6.

**13.** Procédé selon la revendication 10, dans lequel ladite étape de détermination comprend le calcul, pour chaque dite ellipse à n dimensions, d'une métrique de distance (Distance) représentant une valeur de distance unique signifiant la proximité entre les mesures de propriété et le centre de chaque ellipse.

**14.** Procédé selon la revendication 13, dans lequel ladite valeur de distance est calculée comme une somme pondérée des différences respectives entre chaque dite mesure et la moyenne statistique des mesures (correspondant au centre de l'ellipse sur l'axe correspondant à cette mesure), normalisée par l'écart type des mesures (correspondant à la largeur de l'ellipse sur l'axe correspondant à cette mesure).

**Revendications pour l'Etat contractant suivant : GB**

**1.** Procédé de validation d'éléments d'argent, le procédé comprenant l'exécution de n mesures différentes d'un élément d'argent (n étant un entier égal ou supérieur à 2), pour définir un point dans un espace à n dimensions, défini par des axes représentant les n mesures respectives, la détermination du fait que le point se trouve ou non à l'intérieur d'une ellipse à n dimensions, dont les axes correspondent chacun à un axe de mesure de propriété respectif associé à un élément particulier, et l'utilisation de la détermination pour évaluer si l'élément vérifié correspond ou non audit élément particulier.

**2.** Procédé selon la revendication 1, le procédé comportant l'étape de détermination du fait que le point se trouve ou non à l'intérieur de l'une parmi une pluralité d'ellipses à n dimensions, chacune étant associée à un type respectif d'élément d'argent, et de fourniture d'un signal représentant le type d'élément qui a été vérifié conformément à l'ellipse à n dimensions à l'intérieur de laquelle il a été déterminé que se trouvait le point.

**3.** Procédé selon la revendication 1, dans lequel l'ellipse est associée à un élément non-authentique, et le procédé comporte l'étape de fourniture d'un signal indiquant que l'élément vérifié n'est pas authentique si le point se trouve à l'intérieur de ladite ellipse.

**4.** Procédé de validation d'éléments d'argent, comprenant l'exécution de n mesures différentes d'un élément d'argent (n étant un entier égal ou supérieur à 2), et la détermination du fait que l'expression suivante

$$\sum_{i=1}^{n} (a_i P_i - b_i)^2$$

est égale ou supérieure, lorsqu'elle est évaluée, à une constante prédéterminée:

dans laquelle $P_i$ ... $P_n$ concernent les n mesures respectives, et $a_i$ ... $a_n$, $b_i$ ... $b_n$ sont des coefficients prédéterminés.

**5.** Procédé selon la revendication 4, dans lequel chacun des coefficients $a_i$ ... $a_n$, $b_i$ ... $b_n$ est stocké individuellement pour permettre son utilisation pour évaluer ladite expression.

**6.** Procédé selon la revendication 5, dans lequel les autres coefficients liés aux coefficients $a_i$ ... $a_n$, $b_i$ ... $b_n$ sont stockés pour permettre leur utilisation lors de l'évaluation de ladite expression.

**7.** Procédé d'installation d'un appareil de validation de l'argent, destiné à lui permettre de valider des éléments d'un type particulier, le procédé comprenant la détermination de la moyenne statistique pour chacune des n différentes mesures d'éléments dudit type particulier destinées à être exécutées par l'appareil de validation (n étant un entier égal ou supérieur à 2), la définition d'une ellipse à n dimensions, ayant un centre qui correspond à ladite moyenne statistique, et des axes qui correspondent aux axes de mesure de propriété, et le stockage d'informations définissant ladite ellipse dans l'appareil de validation, pour permettre à l'appareil de validation de déterminer si des mesures de propriété exécutées sur un élément vérifié définissent ou non un point à l'intérieur de l'ellipse, et déterminent ainsi si l'élément vérifié est ou non dudit type particulier

**8.** Procédé selon la revendication 7, dans lequel le procédé implique la détermination de la moyenne statistique de chaque mesure, individuellement pour chacun parmi une pluralité d'appareil de validation de pièces de monnaie.

**9.** Procédé selon la revendication 7 ou la revendication 8, dans lequel chaque axe de l'ellipse est calculé en fonction de l'écart type déterminé pour une mesure respective.

**10.** Appareil de validation de pièces de monnaie, comportant des moyens pour prendre des mesures d'une pièce de monnaie, et un circuit de commande pouvant agir pour valider la pièce de monnaie selon un procédé tel que décrit dans l'une quelconque des revendications 1 à 6.

**11.** Appareil de validation de billets de banque, comportant des moyens pour prendre des mesures d'un billet de banque, et un circuit de commande pouvant agir pour valider le billet de banque selon un procédé tel que décrit dans l'une quelconque des revendications 1 à 6.

FIG. 1.

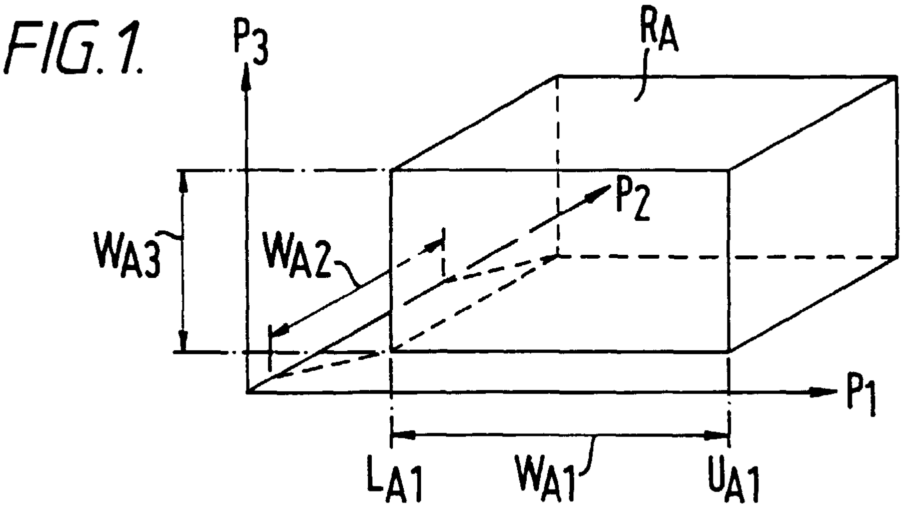


FIG. 2.

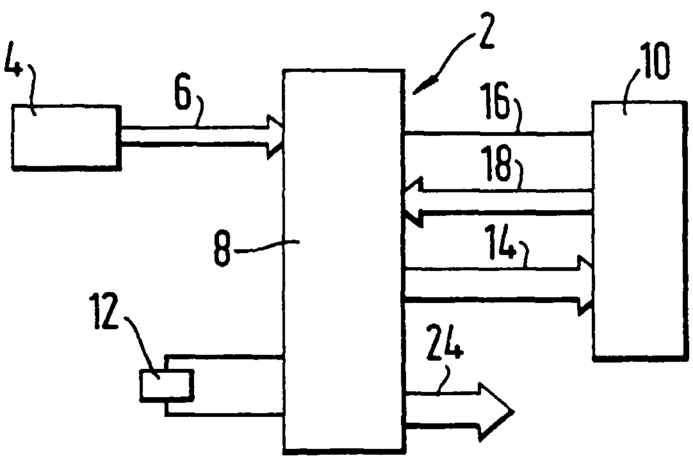


FIG. 3.

| | | A | B | C | D | E | F |
|---|---|---|---|---|---|---|---|
| $P_1$ | | $M_{A1}$ | $M_{B1}$ | $M_{C1}$ | $M_{D1}$ | $M_{E1}$ | $M_{F1}$ |
| | | $D_{A1}$ | $D_{B1}$ | $D_{C1}$ | $D_{D1}$ | $D_{E1}$ | $D_{F1}$ |
| $P_2$ | | $M_{A2}$ | $M_{B2}$ | $M_{C2}$ | $M_{D2}$ | $M_{E2}$ | $M_{F2}$ |
| | | $D_{A2}$ | $D_{B2}$ | $D_{C2}$ | $D_{D2}$ | $D_{E2}$ | $D_{F2}$ |
| $P_3$ | | $M_{A3}$ | $M_{B3}$ | $M_{C3}$ | $M_{D3}$ | $M_{E3}$ | $M_{F3}$ |
| | | $D_{A3}$ | $D_{B3}$ | $D_{C3}$ | $D_{D3}$ | $D_{E3}$ | $D_{F3}$ |

FIG. 4.

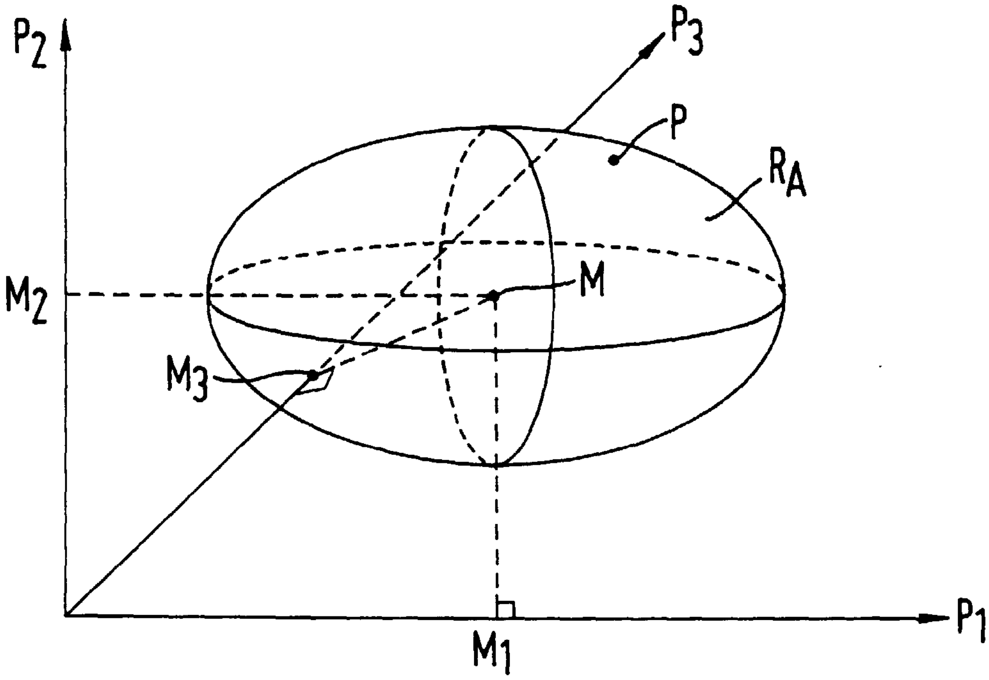
P2
P3
P
RA
M2
M
M3
P1
M1

FIG. 5.

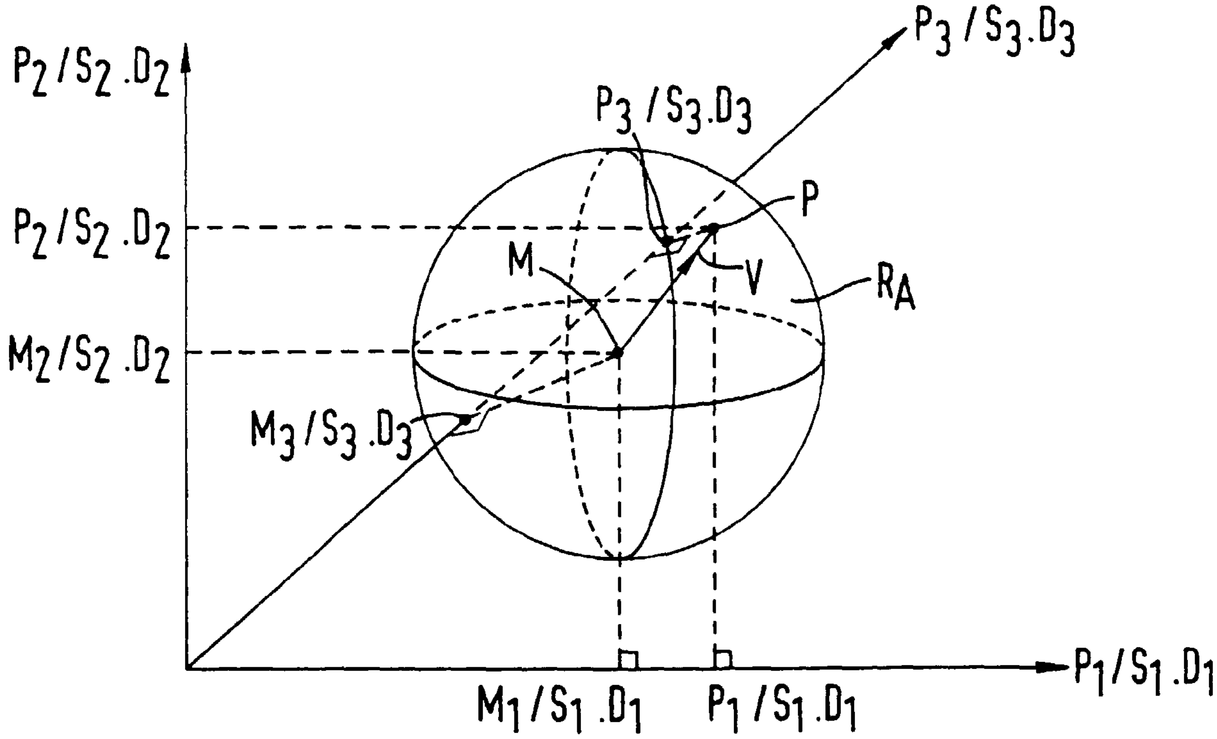
P2 /S2 .D2
P3 /S3.D3
P3 /S3.D3
P
P2 /S2 .D2
M
V
RA
M2/S2 .D2
M3 /S3 .D3
P1/S1 .D1
M1 /S1 .D1
P1 /S1 .D1